# EUROPEAN PATENT APPLICATION

(11) **EP 4 333 381 A1**
(43) Date of publication of application: **06.03.2024**
(21) Application number: 21946499.7
(22) Date of filing: 25.06.2021
(51) Int. Cl.: H04L 12/28, H04W 12/06, H04W 48/08

(54) **CONTROL METHOD, SHARING METHOD, AND DEVICE AND SYSTEM**

(71) Applicant: Huawei Technologies Co., Ltd., Longgang Shenzhen, Guangdong 518129 (CN)
(72) Inventor: TIAN, Jun, Shenzhen, Guangdong 518129 (CN); WAN, Rui, Shenzhen, Guangdong 518129 (CN); ZHANG, Shengjie, Shenzhen, Guangdong 518129 (CN)
(74) Representative: Gill Jennings & Every LLP
(86) International application number: PCT/CN2021/102374
(87) International publication number: WO 2022/267005

(57) **Abstract**

This application provides a control method, a sharing method, a device, and a system, to improve security of a first device and implement sharing of a Bluetooth device. The first device establishes a pairing connection to a second device, and the second device and the first device exchange information with each other, so that the second device controls the first device. On a basis that the second device controls the first device, the second device shares the first device with a third device, and further a sharing connection is established between the first device and the third device, so that the third device uses or manages the first device.

## Description

### TECHNICAL FIELD

This application relates to the field of communication technologies, and more specifically, to a control method, a sharing method, a device, and a system in the field of communication technologies.

### BACKGROUND

With rapid development of communication technologies and artificial intelligence, Bluetooth-based devices (which may be referred to as Bluetooth devices, including a classic Bluetooth BT (Bluetooth) device, a Bluetooth low energy BLE (Bluetooth low energy) device, and the like) such as wearable devices (a watch, a headset, and the like) and smart speakers are widely used. When a Bluetooth device needs to be connected, a pairing mode needs to be entered first (which requires that the Bluetooth device is able to be discovered and connected), and then searching, pairing, and connecting are performed. An entire process is complex and may cause existing connections to be interrupted.

In addition, regardless of whether the Bluetooth device is the classic Bluetooth BT device or the Bluetooth low energy BLE device, the Bluetooth device does not have a concept of use permission or management permission. In other words, any user who gets a Bluetooth device only needs to perform simple operations on the Bluetooth device (such as powering on or off, or pressing and holding a function button), to reset the Bluetooth device to enter a pairing mode, to obtain the use permission or management permission of the Bluetooth device. In a scenario in which a Bluetooth device is lost, security of the Bluetooth device is low.

Therefore, a technical solution that can improve security of a Bluetooth device is urgently needed.

### SUMMARY

Embodiments of this application provide a control method, a sharing method, a device, and a system, to improve security of a Bluetooth device and implement sharing of the Bluetooth device.

According to a first aspect, an embodiment of this application provides a control method, where the control method may include: A second device (for example, a smartphone A having a Bluetooth function) establishes a pairing connection to a first device (for example, a vehicle-mounted device B having the Bluetooth function). The second device sends a first message to the first device, and receives a second message sent by the first device based on the first message.

The first message may indicate that the second device is able to share a connection. Herein, it may be understood as that the first message indicates that the second device supports a secure sharing function. If the second device does not support the secure sharing function, the second device has only use permission but does not have management permission for the first device. The second message indicates that the first device is able to share a connection (which may be understood as that the first device supports the secure sharing function), and the first device sets the second device as a management device.

It may be understood that a process in which the second device sends the first message to the first device and the first device sends the second message to the second device may be considered as secure sharing function interaction between the second device and the first device. In addition, when the first device sets the second device as the management device, the second device becomes a manager of the first device. In other words, the second device has the use permission (which may be permanent use permission) and the management permission for the first device, and the first device may record the use permission and the management permission of the second device.

According to the control method provided in the first aspect of embodiments of this application, on a basis that the first device and the second device establish the pairing connection, the second device can control the first device, so that security of the first device is improved.

For example, the first device may be in a factory setting state, or may be in an unmanaged state. Therefore, when the first device is connected to another device such as the second device as an accessory device for the first time, the second device automatically becomes the management device of the first device.

In a possible implementation, the pairing connection may be established between the second device and the first device in the following two manners.

Manner 1: The first device enters a searching state, and the second device searches for the first device, and establishes the pairing connection to the first device.

Manner 2: The first device and the second device establish the pairing connection through proximity discovery (for example, a near field communication NFC (near field communication) function of a smartphone or broadcast scanning performed by the second device).

It should be noted that the foregoing two manners may be used to implement the pairing connection between the second device and the first device, and another manner than the foregoing two manners may further be used to implement the pairing connection between the second device and the first device. This is not limited in this embodiment of this application.

In a possible implementation, after that the second device receives a second message sent by the first device based on the first message, the second device may further send a third message to the first device. The third message may indicate that the first device is prohibited from being scanned. In other words, a purpose of sending, by the second device, the third message to the first device is to enable the first device to disable a pairing connection function.

In another possible implementation, after that the second device receives a second message sent by the first device based on the first message, the second device may further send a fourth message to the first device. The fourth message indicates that the first device resumes being scanned. In other words, a purpose of sending, by the second device, the fourth message to the first device is to enable the first device to resume the pairing connection function.

In this embodiment of this application, the second device sends, to the first device, the third message that indicates that the first device is prohibited from being scanned or the fourth message that indicates that the first device resumes being scanned, so that the second device separately manages and controls the first device (that is, the second device exclusively controls the first device). The first device can be used only under control of the second device, and a control process is simple and easy to implement. In addition, the second device may manage all connected and paired devices of the first device.

According to a second aspect, an embodiment of this application provides a control method, where the control method may include: A first device establishes a pairing connection to a second device (refer to the foregoing descriptions). The first device receives a first message from the second device. The first device sends a second message to the second device based on the first message.

For detailed descriptions of the first message and the second message, refer to the foregoing descriptions. Details are not described herein again.

According to the control method provided in the second aspect of embodiments of this application, on a basis that the first device and the second device establish the pairing connection, the second device can control the first device, so that security of the first device is improved.

In a possible implementation, after that the first device sends a second message to the second device, the first device may further receive a third message from the second device. The third message may indicate that the first device is prohibited from being scanned. In other words, a purpose of sending, by the second device, the third message to the first device is to enable the first device to disable a pairing connection function.

Further, after the first device receives the third message, the first device may record the third message, and no longer respond to another device than the second device. It should be noted that, because the second device may further be connected to the first device, even if the first device enters a mode of being prohibited from being scanned, the first device may still be in a mode in which the first device can be connected.

In another possible implementation, after that the first device sends a second message to the second device, the first device may further receive a fourth message from the second device. The fourth message indicates that the first device resumes being scanned. In other words, a purpose of sending, by the second device, the fourth message to the first device is to enable the first device to resume the pairing connection function.

Further, after the first device receives the fourth message, the first device records the fourth message, and responds to another device than the second device again. The first device may enter a mode of resuming being scanned (or may be considered as a mode in which the first device resumes being paired and connected) by performing operations such as powering on or off, or pressing and holding a function button.

In this embodiment of this application, the second device sends, to the first device, the third message that indicates that the first device is prohibited from being scanned or the fourth message that indicates that the first device resumes being scanned, so that the second device manages and controls the first device, and a control process is simple and easy to implement.

Because the first device is an accessory device of the second device, even if the second device is a manager of the first device, information such as an address book needs to be synchronized each time the second device is disconnected and reconnected to the first device. When a large amount of information such as the address book needs to be synchronized, the synchronization takes long time. In addition, when a user lends the first device to a third device (for example, a smartphone C of a user C), the third device may use the first device. In this case, the first device is shared. When the first device (such as a vehicle-mounted device B) is shared, there is a risk of leakage of information such as a contact, a call record, or a text message that are of the second device and that are stored in the first device. Therefore, the first device needs to be shared with the third device through the second device, and permission (use permission and/or management permission) of the third device to use the first device needs to be set, to reduce a risk of information leakage of the second device.

Therefore, according to a third aspect, an embodiment of this application provides a sharing method, where the sharing method may include: A second device establishes a pairing connection to a first device (refer to the foregoing descriptions). The second device sends a first message to the first device. The second device receives a second message sent by the first device based on the first message. The second device sends the first message to a third device (for example, a smartphone C having a Bluetooth function), sends information that is of the third device and that is fed back by the third device based on the first message to the first device, and sends information of the first device to the third device. The second device receives connection information fed back by the third device based on the information of the first device, and sends a management instruction to the first device based on the connection information.

For detailed descriptions of the first message and the second message, refer to the foregoing descriptions. Details are not described herein again.

It should be noted that the information of the third device may include address information and/or name information of the third device.

It should be further noted that the information of the first device may include at least one of address information, name information, a device form (where for example, the first device is a vehicle-mounted device rather than a Bluetooth headset), a device type (for example, a classic Bluetooth BT and/or a Bluetooth low energy BLE), and device information (for example, profile (profile) information and service (service) information) of the first device.

In a possible implementation, in a process in which the second device sends the information that is of the third device and that is fed back by the third device to the first device, and sends the information of the first device to the third device, the second device may further send, to the first device and the third device, a verification code randomly generated by the second device, so that sharing security is improved, and speed of connection sharing is further accelerated.

According to the sharing method provided in this embodiment of this application, on a basis that the first device and the second device establish the pairing connection, the second device can control the first device. In addition, on a basis that the second device controls the first device, the second device can share the first device with the third device. The third device can establish a sharing connection to the first device only through sharing by the second device, so that security of the first device is improved, and leakage of information stored in the first device is also prevented.

In a possible implementation, after that the second device receives a second message sent by the first device based on the first message, the second device may further send a third message to the first device. The third message may indicate that the first device is prohibited from being scanned. In other words, a purpose of sending, by the second device, the third message to the first device is to enable the first device to disable a pairing connection function.

In another possible implementation, after that the second device receives a second message sent by the first device based on the first message, the second device may further send a fourth message to the first device. The fourth message indicates that the first device resumes being scanned. In other words, a purpose of sending, by the second device, the fourth message to the first device is to enable the first device to resume the pairing connection function.

In this embodiment of this application, the second device sends, to the first device, the third message that indicates that the first device is prohibited from being scanned or the fourth message that indicates that the first device resumes being scanned, so that the second device manages and controls the first device, and a control process is simple and easy to implement.

For example, the foregoing connection information may include first connection information and second connection information. The first connection information may indicate that the third device agrees to establish a sharing connection to the first device, and the second connection information indicates that the third device refuses to establish the sharing connection to the first device.

Optionally, the foregoing management instruction may include a sharing start instruction and a sharing termination instruction. The sharing start instruction indicates that the first device starts to establish the sharing connection to the third device, and the sharing termination instruction indicates that the first device terminates establishing the sharing connection to the third device.

Further, that the second device sends a management instruction to the first device based on the connection information may be classified into the following two cases.

Case 1: When the connection information is the first connection information, the second device may send the sharing start instruction to the first device.

Case 2: When the connection information is the second connection information, the second device may send the sharing termination instruction to the first device.

In this embodiment of this application, the second device sends the sharing start instruction/sharing termination instruction to the first device based on the first connection information/second connection information sent by the third device, so that the first device performs a corresponding operation based on the management instruction of the second device. Therefore, reliability of a control process is high, and security of the first device is also improved.

In a possible implementation, when the connection information is the first connection information, the second device receives device list information fed back by the first device based on the information of the third device, and changes permission information of the third device based on the device list information. The permission information includes management permission and/or use permission.

It should be noted that, because the second device is a management device of the first device, and the third device establishes a sharing connection to the first device through the second device, the third device usually has only one-time use permission (that is, the third device is a visitor of the first device).

Optionally, the foregoing device list information may include at least one of address information, name information, permission information (such as management permission and/or use permission), and a connection status (such as connected and disconnected) of a device paired with the first device.

According to the sharing method provided in this embodiment of this application, when another device such as the third device uses the first device, the permission information of the third device may be changed (where for example, the one-time use permission of the third device may be changed to permanent use permission, or the one-time use permission of the third device may be changed to permanent use permission and management permission (the third device also becomes a management device of the first device)), so that leakage of information stored in the first device is prevented, and sharing security is improved.

According to a fourth aspect, an embodiment of this application provides a sharing method, where the sharing method may include: A third device receives a first message (refer to the foregoing descriptions) from a second device, and feeds back information of the third device (refer to the foregoing descriptions) to the second device based on the first message. The third device receives information of a first device (refer to the foregoing descriptions) from the second device. The third device feeds back connection information determined based on the information of the first device to the second device.

In a possible implementation, in a process in which the third device receives the information of the first device from the second device, the third device may further receive a verification code randomly generated by the second device, so that sharing security is improved, and speed of connection sharing is further accelerated.

According to the sharing method provided in this embodiment of this application, on a basis that the first device and the second device establish a pairing connection, the first device is shared with the third device through the second device, so that the third device can also use the first device, security of the first device is improved, and leakage of information stored in the first device is also prevented.

In a possible implementation, the third device may determine the connection information based on the information of the first device. The connection information may include first connection information and second connection information. The first connection information may indicate that the third device agrees to establish a sharing connection to the first device, and the second connection information indicates that the third device refuses to establish the sharing connection to the first device.

Further, when the connection information is the first connection information, the third device may send the first connection information to the second device, and send a connection request to the first device. When the connection information is the second connection information, the third device sends the second connection information to the second device.

According to a fifth aspect, an embodiment of this application provides a sharing method, where the sharing method may include: A first device establishes a pairing connection to a second device (refer to the foregoing descriptions). The first device receives a first message from the second device. The first device sends a second message to the second device based on the first message. The first device receives information of a third device from the second device, and enters a sharing mode. The first device receives a management instruction (refer to the foregoing descriptions) from the second device, and determines whether to establish a sharing connection to the third device based on the management instruction.

According to the sharing method provided in this embodiment of this application, on a basis that the first device and the second device establish a pairing connection, the first device is shared with the third device through the second device, so that security management and sharing of the first device are implemented, and security of the first device is improved. In addition, within a time range in which the first device enters the sharing mode, the first device may further receive a verification code randomly generated by the second device, to improve efficiency of pairing and connection between the third device and the first device. In addition, the first device may enter the sharing mode without disconnecting from the second device, which prevents a reconnection between the second device and the first device, and prevents repeated synchronization of information stored in the first device.

In this embodiment of this application, the first device is not limited to the vehicle-mounted device B having the Bluetooth function described in the example in embodiments of this application. Provided that the first device has a wireless communication function, the third device can use (or manage) the first device through sharing by the second device.

In a possible implementation, that the first device receives a management instruction from the second device, and determines whether to establish a sharing connection to the third device based on the management instruction may be classified into the following two cases.

Case 1: When the management instruction is a sharing start instruction, the first device receives a connection request from the third device and the sharing start instruction from the second device, and establishes the sharing connection to the third device.

Case 2: When the management instruction is a sharing termination instruction, the first device exits the sharing mode. Herein, the following two aspects need to be described.

First, the third device unilaterally refuses to establish a sharing connection to the first device, and the third device may send second connection information to the second device. The second device may send the sharing termination instruction to the first device based on the second connection information, and then the first device exits the sharing mode.

Second, although the third device does not refuse to establish the sharing connection to the first device, that is, the third device agrees to establish the sharing connection to the first device, the first device does not receive the connection request from the third device within a time range in which the first device enters the sharing mode. In this case, the first device may actively exit the sharing mode.

Further, when the management instruction received by the first device from the second device is the sharing start instruction, the first device feeds back device list information (refer to the foregoing descriptions) to the second device based on the information of the third device.

According to the sharing method provided in this embodiment of this application, after the third device establishes the sharing connection to the first device, the first device feeds back the device list information to the second device based on the information of the third device, and permission information of the third device is changed through the second device, so that leakage of information stored in the first device is prevented, and sharing security is improved.

According to a sixth aspect, an embodiment of this application provides a second device (for example, a smartphone A), where the second device may include a connection module and a transceiver module. The connection module is configured to establish a pairing connection to a first device (refer to the foregoing descriptions). The transceiver module is configured to: send a first message (refer to the foregoing descriptions) to the first device, and receive a second message (refer to the foregoing descriptions) sent by the first device based on the first message.

In this embodiment of this application, on a basis that the first device and the second device establish a pairing connection, through message exchange between the second device and the first device (where in other words, the second device sends the first message to the first device, and the second device may further receive the second message sent by the first device based on the first message), reliable control of the second device on the first device is implemented, and security of the first device is improved.

In a possible implementation, after the transceiver module of the second device receives the second message sent by the first device based on the first message, the transceiver module may further send a third message to the first device. The third message may indicate that the first device is prohibited from being scanned. In other words, a purpose of sending, by the second device, the third message to the first device is to enable the first device to disable a pairing connection function.

In another possible implementation, after the transceiver module of the second device receives the second message sent by the first device based on the first message, the transceiver module may further send a fourth message to the first device. The fourth message indicates that the first device resumes being scanned. In other words, a purpose of sending, by the second device, the fourth message to the first device is to enable the first device to resume the pairing connection function.

In this embodiment of this application, the second device sends, to the first device, the third message that indicates that the first device is prohibited from being scanned or the fourth message that indicates that the first device resumes being scanned, so that the second device manages and controls the first device, and a control process is simple and easy to implement.

Optionally, the transceiver module of the second device sends the first message (refer to the foregoing descriptions) to a third device, sends information that is of the third device (refer to the foregoing descriptions) and that is fed back by the third device based on the first message to the first device (which may be a transceiver module of the first device), and sends information of the first device (refer to the foregoing descriptions) to the third device. In addition, the transceiver module may further receive connection information fed back by the third device based on the information of the first device, and send a management instruction to the first device based on the connection information.

It should be noted that for detailed descriptions of the connection information and the management instruction, refer to the foregoing descriptions. Details are not described herein again.

In a possible implementation, when the connection information is first connection information, the first connection information indicates that the third device agrees to establish a sharing connection to the first device, and the transceiver module of the second device may send a sharing start instruction to the first device. When the connection information is second connection information, the second connection information indicates that the third device refuses to establish the sharing connection to the first device, and the transceiver module of the second device may send a sharing termination instruction to the first device.

In this embodiment of this application, the second device sends the sharing start instruction/sharing termination instruction to the first device based on the first connection information/second connection information sent by the third device, so that the first device performs a corresponding operation based on the management instruction of the second device. Therefore, reliability of a control process is high, and security of the first device is also improved.

Optionally, when the connection information is the first connection information, the transceiver module of the second device may receive device list information (refer to the foregoing descriptions) fed back by the first device based on the information of the third device, and change permission information of the third device based on the device list information. The permission information may include management permission and/or use permission.

According to the sharing method provided in this embodiment of this application, when another device such as the third device uses the first device, the permission information of the third device may be changed (where for example, the third device may be changed from having only one-time use permission to having permanent use permission, or the third device may be changed from having only the one-time use permission to having permanent use permission and management permission (the third device also becomes a management device of the first device)), so that leakage of information stored in the first device is prevented, and sharing security is improved.

According to a seventh aspect, an embodiment of this application provides a first device (for example, a vehicle-mounted device B), where the first device may include a connection module and a transceiver module. The connection module may be configured to establish a pairing connection to a second device (refer to the foregoing descriptions). The transceiver module may be configured to: receive a first message (refer to the foregoing descriptions) from the second device, and send a second message (refer to the foregoing descriptions) to the second device based on the first message.

In this embodiment of this application, on a basis that the first device and the second device establish a pairing connection, through message exchange between the second device and the first device (where in other words, the first device receives the first message sent by the second device, and the first device further sends the second message to the second device based on the first message), reliable control of the second device on the first device is implemented, and security of the first device is improved.

In a possible implementation, after the transceiver module of the first device sends the second message to the second device, the transceiver module may further receive a third message (refer to the foregoing descriptions) from the second device.

Further, after the transceiver module receives the third message, the transceiver module may record the third message, and no longer respond to another device than the second device. It should be noted that, because the second device may further be connected to the first device, even if the first device enters a mode of being prohibited from being scanned, the first device may still be in a mode in which the first device can be connected.

In another possible implementation, after the transceiver module of the first device sends the second message to the second device, the transceiver module may further receive a fourth message (refer to the foregoing descriptions) from the second device.

Further, after the transceiver module of the first device receives the fourth message, the transceiver module records the fourth message, and responds to another device than the second device again. The first device may enter a mode of resuming being scanned (or may be considered as a mode in which the first device resumes being paired and connected) by performing operations on the first device such as powering on or off, or pressing and holding a function button.

In this embodiment of this application, the second device sends, to the first device, the third message that indicates that the first device is prohibited from being scanned or the fourth message that indicates that the first device resumes being scanned, so that the second device manages and controls the first device, and a control process is simple and easy to implement.

In a possible implementation, the transceiver module of the first device may further receive information of a third device (refer to the foregoing descriptions) from the second device (which may be a transceiver module of the second device), and enter a sharing mode. In addition, the transceiver module of the first device may further receive a management instruction (refer to the foregoing descriptions) from the second device, and determine whether to establish a sharing connection to the third device based on the management instruction.

Further, when the management instruction is a sharing start instruction, the transceiver module of the first device may receive a connection request from the third device and the sharing start instruction from the second device, and establish the sharing connection to the third device. When the management instruction is a sharing termination instruction, the first device may exit the sharing mode. Herein, the following two aspects need to be described.

First, the third device unilaterally refuses to establish the sharing connection to the first device, and the third device may send second connection information to the second device. The second device may send the sharing termination instruction to the first device based on the second connection information, and then the first device exits the sharing mode.

Second, although the third device does not refuse to establish the sharing connection to the first device, that is, the third device agrees to establish the sharing connection to the first device, the first device does not receive the connection request from the third device within a time range in which the first device enters the sharing mode. In this case, the first device may actively exit the sharing mode.

Optionally, the first device may further include a setting module. The setting module may set a time range for entering the sharing mode of the first device. If the connection request from the third device is not received within the time range, the first device exits the sharing mode (refer to the foregoing descriptions).

Further, when the management instruction received by the transceiver module of the first device from the second device is the sharing start instruction, the transceiver module feeds back device list information (refer to the foregoing descriptions, and details are not described herein again) to the second device based on the information of the third device.

According to a sharing method provided in this embodiment of this application, when another device such as the third device uses the first device, the second device may change the permission information of the third device (where for example, the third device may be changed from having only one-time use permission to having permanent use permission, or the third device may be changed from having only the one-time use permission to having permanent use permission and management permission (the third device also becomes a management device of the first device)), so that leakage of information stored in the first device is prevented, and sharing security is improved.

According to an eighth aspect, this application provides a third device (for example, a smartphone C), where the third device may include a receiving module and a sending module. The receiving module may be configured to: receive a first message (refer to the foregoing descriptions) from a second device (which may be a transceiver module of the second device), feed back information of the third device (refer to the foregoing descriptions) to the second device (which may be the transceiver module of the second device) based on the first message, and receive information of a first device (refer to the foregoing descriptions) sent by the second device (which may be the transceiver module of the second device). The sending module may be configured to feed back connection information (refer to the foregoing descriptions) determined based on the information of the first device to the second device (which may be the transceiver module of the second device).

In this embodiment of this application, on a basis that the second device and the first device establish a pairing connection, the first device is shared with the third device through the second device, so that the third device can use (or manage) the first device, and security of the first device is also improved.

In a possible implementation, the sending module may determine the connection information based on the information of the first device. In other words, the sending module may determine, based on the information of the first device, that the connection information is first connection information (refer to the foregoing descriptions) or second connection information (refer to the foregoing descriptions). When the connection information is the first connection information, the sending module sends the first connection information to the second device (which may be the transceiver module of the second device), and sends a connection request to the first device (which may be a transceiver module of the first device). When the connection information is the second connection information, the sending module sends the second connection information to the second device (which may be the transceiver module of the second device).

In this embodiment of this application, the second device sends the sharing start instruction/sharing termination instruction to the first device based on the first connection information/second connection information sent by the third device, so that the first device performs a corresponding operation based on a management instruction of the second device. Therefore, reliability of a control process is high, and security of the first device is also improved.

According to a ninth aspect, an embodiment of this application provides a control system, where the control system may include the second device in the sixth aspect and the possible implementations of the sixth aspect, and the first device in the seventh aspect and the possible implementations of the seventh aspect. The first device may be coupled to the second device.

According to a tenth aspect, an embodiment of this application provides a sharing system, where the sharing system may include the second device in the sixth aspect and the possible implementations of the sixth aspect, the first device in the seventh aspect and the possible implementations of the seventh aspect, and the third device in the eighth aspect and the possible implementations of the eighth aspect. The first device, the second device, and the third device may be coupled to each other.

According to an eleventh aspect, an embodiment of this application provides a computer-readable storage medium, and the computer-readable storage medium stores instructions. When the instructions are run on a computer, the instructions may be used to perform the control method provided in the first aspect and the possible implementations of the first aspect and the second aspect and the possible implementations of the second aspect, and may be further used to perform the sharing method provided in the third aspect and the possible implementations of the third aspect to the fifth aspect and the possible implementations of the fifth aspect.

According to a twelfth aspect, an embodiment of this application provides a computer program product, where the computer program product includes instructions. When the instructions are run on a computer or a processor, the computer or the processor may be enabled to implement the control method provided in the first aspect and the possible implementations of the first aspect and the second aspect and the possible implementations of the second aspect, and the computer or the processor may further be enabled to implement the sharing method provided in the third aspect and the possible implementations of the third aspect to the fifth aspect and the possible implementation of the fifth aspect.

It should be understood that the technical solutions of the second aspect and the twelfth aspect of this application are the same as those of the first aspect of this application, and beneficial effects achieved by the aspects and corresponding feasible implementations are similar. Details are not described again.

### BRIEF DESCRIPTION OF DRAWINGS

FIG. 1 is a schematic flowchart of a control method according to an embodiment of this application;
FIG. 2 is another schematic flowchart of a control method according to an embodiment of this application;
FIG. 3 is still another schematic flowchart of a control method according to an embodiment of this application;
FIG. 4 is a schematic flowchart of a sharing method according to an embodiment of this application;
FIG. 5 is a schematic diagram of a structure of a smartphone A according to an embodiment of this application;
FIG. 6 is a schematic diagram of a structure of a vehicle-mounted device B according to an embodiment of this application;
FIG. 7 is a schematic diagram of a structure of a smartphone C according to an embodiment of this application;
FIG. 8 is a schematic diagram of a structure of a control system CS according to an embodiment of this application; and
FIG. 9 is a schematic diagram of a structure of a sharing system SS according to an embodiment of this application.

### DESCRIPTION OF EMBODIMENTS

The following describes technical solutions of this application with reference to accompanying drawings.

To make objectives, technical solutions, and advantages of this application clearer, the following clearly and completely describes the technical solutions in this application with reference to the accompanying drawings in this application. It is clear that the described embodiments are merely a part rather than all of embodiments of this application. All other embodiments obtained by a person of ordinary skill in the art based on embodiments of this application without creative efforts shall fall within the protection scope of this application.

In embodiments, claims, and the accompanying drawings of this application, terms "first", "second", and the like are merely intended for a purpose of differentiation and description, and shall not be understood as an indication or implication of relative importance or an indication or implication of an order. In addition, terms "include" and "have" and any variations thereof are intended to cover a non-exclusive inclusion, for example, include a series of steps or units. A method, system, product, or device is not necessarily limited to those clearly listed steps or units, but may include other steps or units that are not expressly listed or inherent to such a process, method, product, or device.

It should be understood that, in this application, "at least one" means one or more, and "a plurality of" means two or more. "And/or" is used to describe an association relationship between associated objects, and indicates that three relationships may exist. For example, "A and/or B" may indicate the following three cases: Only A exists, only B exists, and both A and B exist, where A and B may be singular or plural. The character "/" generally indicates that the associated objects are in an "or" relationship. "At least one of the following" or a similar expression thereof refers to any combination of these items, including any combination of singular items (pieces) or plural items (pieces). For example, at least one of a, b, or c may indicate a, b, c, "a and b", "a and c", "b and c", or "a, b, and c", where a, b, and c may be singular or plural.

With rapid development of communication technologies and artificial intelligence, Bluetooth devices (including a classic Bluetooth BT, a Bluetooth low energy BLE, and the like) such as wearable devices (a watch having a Bluetooth function, a headset having the Bluetooth function, and the like) and audio devices (which may be a home smart speaker or a vehicle-mounted device, and the like) with the Bluetooth function are widely applied. When a Bluetooth device needs to be connected, the Bluetooth device needs to enter a pairing mode first (for example, the classic Bluetooth BT enters a pairing state, and the low energy Bluetooth BLE enters a broadcast state), and then searching, pairing, and connecting are performed. The entire operation process is complex and may cause existing connections to be interrupted.

In addition, regardless of whether the Bluetooth device is the classic Bluetooth BT or the Bluetooth low energy BLE, the Bluetooth device does not have a concept of use permission or management permission. In other words, any user only needs to perform simple operations on the Bluetooth device (such as powering on or off, or pressing and holding a function button (where some Bluetooth devices display a blue indicator or a red indicator and a blue indicator blink alternately when the user presses and holds a function button)), to reset the Bluetooth device to enter the pairing mode, so as to obtain use permission or management permission of the Bluetooth device. In a scenario such as loss of a Bluetooth device, security of the Bluetooth device is low.

For example, a user A is an owner of a Bluetooth device B (for example, a headset having the Bluetooth function or a watch having the Bluetooth function). Therefore, a smartphone A (having the Bluetooth function, and may be connected to the Bluetooth device B through the Bluetooth function) of the user A is a manager of the Bluetooth device B. It may be understood that the smartphone A has not only management permission for the Bluetooth device, but also use permission (which may be permanent use permission) for the Bluetooth device B. When a user C performs the foregoing simple operations on the Bluetooth device B, the Bluetooth device B can be reset to enter the pairing mode, so that the smartphone C of the user C (having the Bluetooth function, which can be used to connect the smartphone C to the Bluetooth device B) obtains not only the use permission of the Bluetooth device B, but also the management permission of the Bluetooth device B. It can be found that the smartphone C also becomes a manager of the Bluetooth device B. In other words, the smartphone A serving as a host and the smartphone C serving as a visitor have no difference in permission for the Bluetooth device B, that is, both have the use permission and the management permission for the Bluetooth device B.

To overcome the foregoing security problem of the Bluetooth device, an embodiment of this application provides a device information synchronization method based on a network cloud service. When the Bluetooth device is connected to the Internet, an account of an individual user may be logged in, to enable the Bluetooth device to automatically synchronize pairing information. In this method, the account of the individual user needs to be logged in, and the Bluetooth device further needs to be connected to the Internet. In a scenario without the Internet, the Bluetooth device cannot be used. In addition, this method is used to implement pairing information synchronization between a plurality of Bluetooth devices of an individual user, and cannot solve a problem that a Bluetooth device of a plurality of individual users is shared or temporarily borrowed.

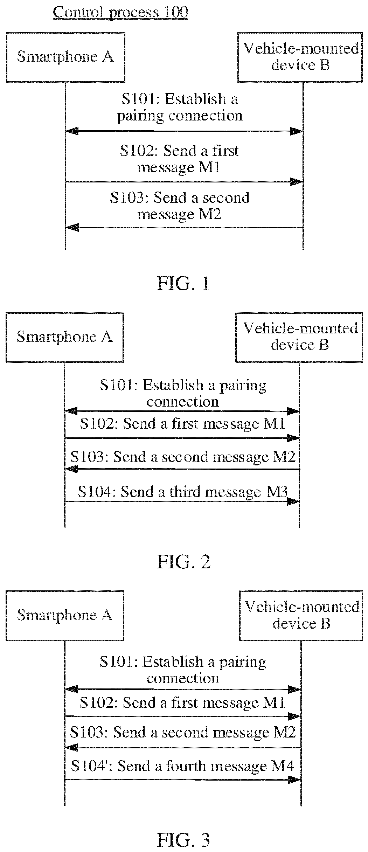

To overcome the foregoing security problem of the Bluetooth device, a problem that the Bluetooth device cannot be used (including a problem that the Bluetooth device cannot be used due to no Internet, or a Bluetooth device of a plurality of individual users is shared or temporarily borrowed), and the like, an embodiment of this application provides a control method of a Bluetooth device by using a smartphone A (namely, a second device, or may be another device having a user interface UI) and a vehicle-mounted device B (namely, a first device, or may be an in-vehicle sound box that has a Bluetooth function, and is used as an accessory device of the second device). As shown in FIG. 1, a control process 100 may include the following steps.

Step S101: The smartphone A establishes a pairing connection to the vehicle-mounted device B.

Step S102: The smartphone A sends a first message M1 to the vehicle-mounted device B.

Step S103: The vehicle-mounted device B sends a second message M2 to the smartphone A based on the first message M1.

Further, the first message M1 may indicate that the smartphone A is able to share a connection. Herein, it may be understood as that the first message M1 indicates that the smartphone A supports a secure sharing function. If the smartphone A does not support the secure sharing function, the smartphone A has only use permission for the vehicle-mounted device B, but does not have management permission. The second message M2 indicates that the vehicle-mounted device B is able to share a connection (which may be understood as that the vehicle-mounted device B supports the secure sharing function), and the vehicle-mounted device B sets the smartphone A as a management device.

It may be understood that a process in which the smartphone A sends the first message M1 to the vehicle-mounted device B and the vehicle-mounted device B sends the second message M2 to the smartphone A may be considered as secure sharing function interaction between the smartphone A and the vehicle-mounted device B. In addition, when the vehicle-mounted device B sets the smartphone A as the management device, the smartphone A becomes a manager of the vehicle-mounted device B. In other words, the smartphone A has the use permission (which may be permanent use permission) and the management permission for the vehicle-mounted device B, and the vehicle-mounted device B may record the use permission and the management permission of the smartphone A.

According to the control method provided in this embodiment of this application, on a basis that the vehicle-mounted device B and the smartphone A establish the pairing connection, the smartphone A can control the vehicle-mounted device B, so that security of the vehicle-mounted device B is improved.

For example, the vehicle-mounted device B may be in a factory setting state, or may be in an unmanaged state. Therefore, when the vehicle-mounted device B is connected to another device such as the smartphone A as an accessory device for the first time, the smartphone A automatically becomes the management device of the vehicle-mounted device B.

In a possible implementation, the pairing connection may be established between the smartphone A and the vehicle-mounted device B in the following two manners.

Manner 1: The vehicle-mounted device B enters a searching state, and the smartphone A searches for the smart device B, and establishes the pairing connection to the vehicle-mounted device B.

Manner 2: The vehicle-mounted device B and the smartphone A establish the pairing connection through proximity discovery (for example, a near field communication NFC (near field communication) function of a smartphone or broadcast scanning performed by the smartphone A).

It should be noted that the foregoing two manners may be used to implement the pairing connection between the smartphone A and the vehicle-mounted device B, and another manner than the foregoing two manners may further be used to implement the pairing connection between the smartphone A and the vehicle-mounted device B. This is not limited in this embodiment of this application.

In an example, after the vehicle-mounted device B sends the second message M2 to the smartphone A, as shown in FIG. 2, step S104 may be further performed: The smartphone A sends a third message M3 to the vehicle-mounted device B. The third message M3 may indicate that the vehicle-mounted device B is prohibited from being scanned. In other words, a purpose of sending, by the smartphone A, the third message M3 to the vehicle-mounted device B is to enable the vehicle-mounted device B to disable a pairing connection function.

Further, after the vehicle-mounted device B receives the third message M3, the vehicle-mounted device B records the third message M3, and no longer responds to another device than the smartphone A. The vehicle-mounted device B may enter a mode of being prohibited from being scanned by performing operations on the vehicle-mounted device B such as powering on or off, or pressing and holding a function button. It should be noted that, because the smart device A may further be connected to the vehicle-mounted device B, even if the vehicle-mounted device B enters the mode of being prohibited from being scanned, the vehicle-mounted device B may still be in a mode in which the vehicle-mounted device B can be connected.

In another example, after the vehicle-mounted device B sends the second message M2 to the smartphone A, as shown in FIG. 3, step S104' may be further performed: The smartphone A sends a fourth message M4 to the vehicle-mounted device B. The fourth message M4 indicates that the vehicle-mounted device B resumes being scanned. In other words, a purpose of sending, by the smartphone A, the fourth message M4 to the vehicle-mounted device B is to enable the vehicle-mounted device B to resume the pairing connection function.

Further, after the vehicle-mounted device B receives the fourth message M4, the vehicle-mounted device B records the fourth message M4, and responds to another device than the smartphone A again. The vehicle-mounted device B may enter a mode of resuming being scanned (or may be considered as a mode in which the vehicle-mounted device B resumes being paired and connected) by performing operations on the vehicle-mounted device B such as powering on or off, or pressing and holding a function button.

In this embodiment of this application, the smartphone A sends, to the vehicle-mounted device B, the third message that indicates that the vehicle-mounted device B is prohibited from being scanned or the fourth message that indicates that the vehicle-mounted device B resumes being scanned, so that the smartphone A separately manages and controls the vehicle-mounted device B (that is, the smartphone A exclusively controls the vehicle-mounted device B). The vehicle-mounted device B can be used only under control of the smartphone A, and a control process is simple and easy to implement. In addition, the smartphone A may manage all connected and paired devices of the vehicle-mounted device B.

Because the vehicle-mounted device B is an accessory device of the smartphone A, even if the smartphone A is a manager of the vehicle-mounted device B, information such as an address book needs to be synchronized each time the smartphone A is disconnected and reconnected to the vehicle-mounted device B. When a large amount of information such as the address book needs to be synchronized, the synchronization takes long time. In addition, when the user A lends a vehicle to another user, the another user may use the vehicle-mounted device B. In this case, the vehicle-mounted device B is shared. When the vehicle-mounted device is shared, there is a risk of leakage of private information such as a contact, a call record, and a text message that are of the smartphone A and that are stored in the vehicle-mounted device B.

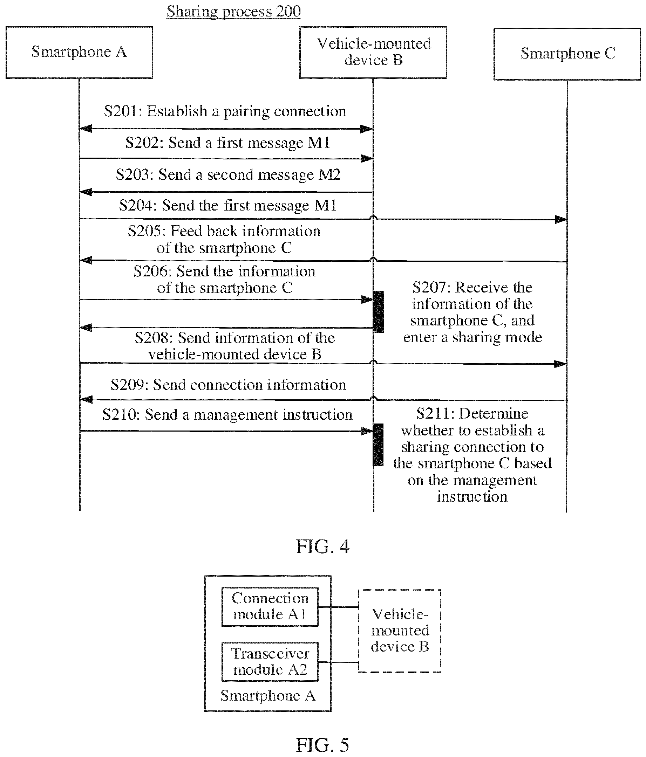

To prevent leakage of information stored in a vehicle-mounted device B and transmission of a large amount of duplicate data (for example, an address book of a smartphone A), an embodiment of this application provides a sharing method by using the smartphone A (namely, a second device), the vehicle-mounted device B (namely, a first device), and a smartphone C (namely, a third device) as an example, as shown in FIG. 4. A sharing process 200 may include the following steps
Step S201: The smartphone A establishes a pairing connection to the vehicle-mounted device B.
Step S202: The smartphone A sends a first message M1 to the vehicle-mounted device B.
Step S203: The vehicle-mounted device B sends a second message M2 to the smartphone A based on the first message M1.
Step S204: The smartphone A sends the first message M1 to the smartphone C.
Step S205: The smartphone C feeds back information of the smartphone C to the smartphone A based on the first message M1.
Step S206: The smartphone A sends the information of the smartphone C to the vehicle-mounted device B.
Step S207: The vehicle-mounted device B receives the information of the smartphone C, and enters a sharing mode.
Step S208: The smartphone A sends information of the vehicle-mounted device B to the smartphone C.
Step S209: The smartphone C determines connection information based on the information of the vehicle-mounted device B, and sends the connection information to the smartphone A.
Step S210: The smartphone A sends a management instruction to the vehicle-mounted device B based on the connection information.
Step S211: The vehicle-mounted device B determines whether to establish a sharing connection to the smartphone C based on the management instruction.

Further, the first message M1 may indicate that the smartphone A is able to share a connection. Herein, it may be understood as that the first message M1 indicates that the smartphone A supports a secure sharing function. If the smartphone A does not support the secure sharing function, the smartphone A has only use permission for the vehicle-mounted device B, but does not have management permission. The second message M2 indicates that the vehicle-mounted device B is able to share a connection (which may be understood as that the vehicle-mounted device B supports the secure sharing function), and the vehicle-mounted device B sets the smartphone A as a management device.

It may be understood that a process in which the smartphone A sends the first message M1 to the vehicle-mounted device B and the vehicle-mounted device B sends the second message M2 to the smartphone A may be considered as secure sharing function interaction between the smartphone A and the vehicle-mounted device B. In addition, when the vehicle-mounted device B sets the smartphone A as the management device, the smartphone A becomes a manager of the vehicle-mounted device B. In other words, the smartphone A has the use permission (which may be permanent use permission) and the management permission for the vehicle-mounted device B, and the vehicle-mounted device may record the use permission and the management permission of the smartphone A.

In a possible implementation, the information of the vehicle-mounted device B may include at least one of address information, name information, a device form (where for example, the device is the vehicle-mounted device B rather than a Bluetooth headset), a device type (for example, a classic Bluetooth BT and/or a Bluetooth low energy BLE), and device information (for example, profile (profile) information and service (service) information) of the vehicle-mounted device B.

In another possible implementation, in a process in which the smartphone A sends the information of the smartphone C to the vehicle-mounted device B and the smartphone A sends the information of the vehicle-mounted device B to the smartphone C, the smartphone A may further send a verification code randomly generated by the smartphone A to the vehicle-mounted device B and the smartphone C, so that sharing security is improved, and speed of connection sharing is further accelerated.

According to the foregoing sharing method in this embodiment of this application, on a basis that the vehicle-mounted device B and the smartphone A establish the pairing connection, the smartphone A can control the vehicle-mounted device B. In addition, on a basis that the smartphone A controls the vehicle-mounted device B, the smartphone A can share the vehicle-mounted device B with the smartphone C. The smartphone C can establish a sharing connection to the vehicle-mounted device B only through sharing by the smartphone A, so that security of the vehicle-mounted device B is improved, and leakage of information stored in the vehicle-mounted device B is also prevented.

In addition, within a time range in which the vehicle-mounted device B enters the sharing mode, the vehicle-mounted device B may receive the verification code randomly generated by the smartphone A, to improve connection efficiency between the smartphone C and the vehicle-mounted device B. In addition, the vehicle-mounted device B can enter the sharing mode without disconnecting from the smartphone A, which prevents a reconnection between the smartphone A and the vehicle-mounted device B, and prevents repeated synchronization of information stored in the vehicle-mounted device B.

In a possible implementation, the pairing connection may be established between the smartphone A and the vehicle-mounted device B in the following two manners.

Manner 1: The vehicle-mounted device B enters a searching state, and the smartphone A searches for the smart device B, and establishes the pairing connection to the vehicle-mounted device B.

Manner 2: The vehicle-mounted device B and the smartphone A establish the pairing connection through proximity discovery (for example, a near field communication NFC (near field communication) function of a smartphone or broadcast scanning performed by the smartphone A).

It should be noted that the foregoing two manners may be used to implement the pairing connection between the smartphone A and the vehicle-mounted device B, and another manner than the foregoing two manners may further be used to implement the pairing connection between the smartphone A and the vehicle-mounted device B. This is not limited in this embodiment of this application.

For example, the foregoing connection information LM may include first connection information LM1 and second connection information LM2. The first connection information LM1 may indicate that the smartphone C agrees to establish the sharing connection to the vehicle-mounted device B, and the second connection information LM2 indicates that the smartphone C refuses to establish the sharing connection to the vehicle-mounted device B.

Optionally, the management instruction MI may include a sharing start instruction MI1 and a sharing termination instruction MI2. The sharing start instruction MI1 indicates that the vehicle-mounted device B starts to establish the sharing connection to the smartphone C, and the sharing termination instruction MI2 indicates that the vehicle-mounted device B terminates establishing the sharing connection to the smartphone C.

Further, that the smartphone A sends the management instruction MI to the vehicle-mounted device B based on the connection information LM may be classified into the following two cases.

Case 1: When the connection information LM is the first connection information LM1, the smartphone A sends the sharing start instruction MI1 to the vehicle-mounted device B.

Case 2: When the connection information LM is the second connection information LM2, the smartphone A sends the sharing termination instruction MI2 to the vehicle-mounted device B.

In this embodiment of this application, the smartphone A sends the sharing start instruction/sharing termination instruction to the vehicle-mounted device B based on the first connection information/second connection information sent by the smartphone C, so that the smartphone B performs a corresponding operation based on the management instruction of the smartphone A. Therefore, reliability of a control process is high, and security of the vehicle-mounted device B is also improved.

In a possible implementation, when the management instruction MI is the sharing start instruction MI1, or in other words, the vehicle-mounted device B is about to start establishing the sharing connection to the smartphone C, the smartphone C sends a connection request to the vehicle-mounted device B. The vehicle-mounted device B receives the connection request and the sharing start instruction from the smartphone A, and establishes the sharing connection to the smartphone C.

In another possible implementation, when the management instruction MI is the sharing termination instruction MI2, the vehicle-mounted device B exits the sharing mode. Herein, the following two aspects need to be described.

First, the smartphone C unilaterally refuses to establish the sharing connection to the vehicle-mounted device B, and the smartphone C may send the second connection information LM2 to the smartphone A. The smartphone A may send the sharing termination instruction MI2 to the vehicle-mounted device B based on the second connection information LM2, and then the vehicle-mounted device B exits the sharing mode.

Second, although the smartphone C does not refuse to establish the sharing connection to the vehicle-mounted device B, that is, the smartphone C agrees to establish the sharing connection to the vehicle-mounted device B, the vehicle-mounted device B does not receive the connection request from the smartphone C within a time range that is set by the vehicle-mounted device B to enter the sharing mode. In this case, the vehicle-mounted device B may actively exit the sharing mode.

In an example, the management instruction MI is the sharing start instruction MI1, and the vehicle-mounted device B feeds back device list information to the smartphone A based on the information of the smartphone C. The smartphone A may change permission information of the smart device C based on the device list information. The permission information includes management permission and/or use permission.

According to the sharing method provided in this embodiment of this application, when another device such as the smartphone C uses the vehicle-mounted device B, the permission information of the smartphone C (in other words, a device associated with the vehicle-mounted device B) may be changed (where for example, the smartphone C may be changed from having only one-time use permission to having permanent use permission, or the smartphone C may be changed from having only the one-time use permission to having permanent use permission and management permission (the smartphone C also becomes a management device of the vehicle-mounted device B)), so that leakage of information stored in the vehicle-mounted device is prevented, and sharing security is improved.

It should be noted that, because the smartphone A is the management device of the vehicle-mounted device B, and the smartphone C establishes the sharing connection to the vehicle-mounted device B through the smartphone A, the smartphone C usually has only the one-time use permission (that is, the smartphone C is a visitor of the vehicle-mounted device B).

Optionally, the foregoing device list information may include at least one of address information, name information, permission information (such as management permission and/or use permission), and a connection status (such as connected and disconnected) of a device paired with the vehicle-mounted device B.

Further, the smartphone A changes the permission information of the smartphone C based on the address information, the name information, the permission information, the connection status, and the like that are fed back by the vehicle-mounted device B and that are of the device paired with the vehicle-mounted device B. That is, the smartphone A may perform privilege escalation or privilege degradation on the smartphone C.

In an example, the smartphone A may perform privilege escalation on the smartphone C. For example, the smartphone A changes the one-time use permission of the smartphone C to the permanent use permission, so that the smartphone C changes from the visitor of the vehicle-mounted device B to a common user. For another example, the smartphone A changes the permanent use permission of the smartphone C to the permanent use permission and management permission, so that the smartphone C changes from the common user of the vehicle-mounted device B to a manager.

In another example, the smartphone A may perform privilege degradation on the smartphone C. For example, the smartphone A changes the permanent use permission of the smartphone C to the one-time use permission, so that the smartphone C changes from the common user of the vehicle-mounted device to the visitor. For another example, the smartphone A changes the permanent use permission and management permission of the smartphone C to the permanent use permission, so that the smartphone C changes from the manager of the vehicle-mounted device B to the common user.

According to the sharing method provided in this embodiment of this application, when another device such as the smartphone C uses the vehicle-mounted device B, a quantity of connections between the smartphone C and the vehicle-mounted device can be limited through the management instruction sent by the smartphone A, and the permission information of the smartphone C may be further set (for example, the smartphone C may be set to have the one-time use permission or the permanent use permission of the vehicle-mounted device B), so that leakage of information stored in the vehicle-mounted device B is prevented, and sharing security is improved.

An embodiment of this application provides a smartphone A (namely, a second device), as shown in FIG. 5. The smartphone A may include a connection module A1 and a transceiver module A2. The connection module A1 is configured to establish a pairing connection to a vehicle-mounted device B (refer to the following descriptions). The transceiver module A2 is configured to: send a first message M1 to the vehicle-mounted device B, and receive a second message M2 sent by the vehicle-mounted device B based on the first message M1.

Further, the first message M1 may indicate that the smartphone A is able to share a connection. Herein, it may be understood as that the first message M1 indicates that the smartphone A supports a secure sharing function. If the smartphone A does not support the secure sharing function, the smartphone A has only use permission for the vehicle-mounted device B, but does not have management permission. The second message M2 indicates that the vehicle-mounted device B is able to share a connection (which may be understood as that the vehicle-mounted device B supports the secure sharing function), and the vehicle-mounted device B sets the smartphone A as a management device.

It may be understood that a process in which the transceiver module A2 of the smartphone A sends the first message M1 to the vehicle-mounted device B and the vehicle-mounted device B sends the second message M2 to the transceiver module A2 of the smartphone A may be considered as secure sharing function interaction between the smartphone A and the vehicle-mounted device B. In addition, when the vehicle-mounted device B sets the smartphone A as the management device, the smartphone A becomes a manager of the vehicle-mounted device B. In other words, the smartphone A has the use permission (which may be permanent use permission) and the management permission for the vehicle-mounted device B, and the vehicle-mounted device B may record the use permission and the management permission of the smartphone A.

According to the technical solution provided in this embodiment of this application, on a basis that the smartphone A and the vehicle-mounted device B establish a pairing connection, the smartphone A can control the vehicle-mounted device B, so that security of the vehicle-mounted device B is improved.

For example, the vehicle-mounted device B may be in a factory setting state, or may be in an unmanaged state. Therefore, when the vehicle-mounted device B is connected to another device such as the smartphone A as an accessory device for the first time, the smartphone A automatically becomes the management device of the vehicle-mounted device B.

In a possible implementation, the transceiver module A2 may send a third message M3 to the vehicle-mounted device B. The third message M3 may indicate that the vehicle-mounted device B is prohibited from being scanned. In other words, a purpose of sending, by the transceiver module A2, the third message M3 to the vehicle-mounted device B is to enable the vehicle-mounted device B to disable a pairing connection function.

In another possible implementation, the transceiver module A2 may send a fourth message M4 to the vehicle-mounted device B. The fourth message M4 indicates that the vehicle-mounted device B resumes being scanned. In other words, a purpose of sending, by the transceiver module A2, the fourth message M4 to the vehicle-mounted device B is to enable the vehicle-mounted device B to resume the pairing connection function.

Further, the transceiver module A2 may send the first message M1 (refer to the foregoing descriptions) to the smartphone C (refer to the following descriptions), send information that is of the smartphone C and that is fed back by the smartphone C based on the first message M1 to the vehicle-mounted device B, and send information of the vehicle-mounted device B to the smartphone C. In addition, the transceiver module A2 may further receive connection information LM fed back by the smartphone C based on the information of the vehicle-mounted device B, and send a management instruction MI to the vehicle-mounted device B based on the connection information LM.

It should be noted that the information of the smartphone C may include address information and/or name information of the smartphone C.

It should be further noted that the information of the vehicle-mounted device B may include at least one of address information, name information, a device form (where for example, the device is the vehicle-mounted device B rather than a Bluetooth headset), a device type (for example, a classic Bluetooth BT and/or a Bluetooth low energy BLE), and device information (for example, profile (profile) information and service (service) information) of the vehicle-mounted device B.

For example, the foregoing connection information LM may include first connection information LM1 and second connection information LM2. The first connection information LM1 may indicate that the smartphone C agrees to establish a sharing connection to the vehicle-mounted device B, and the second connection information LM2 indicates that the smartphone C refuses to establish the sharing connection to the vehicle-mounted device B.

Optionally, the management instruction MI may include a sharing start instruction MI1 and a sharing termination instruction MI2. The sharing start instruction MI1 indicates that the vehicle-mounted device B starts to establish the sharing connection to the smartphone C, and the sharing termination instruction MI2 indicates that the vehicle-mounted device B terminates establishing the sharing connection to the smartphone C.

Further, that the transceiver module A2 sends the management instruction MI to the vehicle-mounted device B based on the connection information LM may be classified into the following two cases.

Case 1: When the connection information LM is the first connection information LM1, the transceiver module A2 sends the sharing start instruction MI1 to the vehicle-mounted device B.

Case 2: When the connection information LM is the second connection information LM2, the transceiver module A2 sends the sharing termination instruction MI2 to the vehicle-mounted device B.

In a possible implementation, when the connection information LM is the first connection information LM1, the transceiver module A2 receives device list information fed back by the vehicle-mounted device B based on the information of the smartphone C, and changes permission information of the smartphone C based on the device list information. The permission information includes management permission and/or use permission.

It should be noted that, because the smartphone A is the management device of the vehicle-mounted device B, and the smartphone C establishes the sharing connection to the vehicle-mounted device B through the smartphone A, the smartphone C usually has only the one-time use permission (that is, the smartphone C is a visitor of the vehicle-mounted device B).

Optionally, the foregoing device list information may include at least one of address information, name information, permission information (such as management permission and/or use permission), and a connection status (such as connected and disconnected) of a device paired with the vehicle-mounted device B.

Further, the smartphone A changes the permission information of the smartphone C based on the address information, the name information, the permission information, the connection status, and the like that are fed back by the vehicle-mounted device B and that are of the device paired with the vehicle-mounted device B. That is, the smartphone A may perform privilege escalation or privilege degradation on the smartphone C.

In an example, the smartphone A may perform privilege escalation on the smartphone C. For example, the smartphone A changes the one-time use permission of the smartphone C to permanent use permission, so that the smartphone C changes from the visitor of the vehicle-mounted device B to a common user. For another example, the smartphone A changes the permanent use permission of the smartphone C to permanent use permission and management permission, so that the smartphone C changes from the common user of the vehicle-mounted device B to a manager.

In another example, the smartphone A may perform privilege degradation on the smartphone C. For example, the smartphone A changes the permanent use permission of the smartphone C to the one-time use permission, so that the smartphone C changes from the common user of the vehicle-mounted device to the visitor. For another example, the smartphone A changes the permanent use permission and management permission of the smartphone C to the permanent use permission, so that the smartphone C changes from the manager of the vehicle-mounted device B to the common user.

When the smartphone C uses the vehicle-mounted device B, the smartphone A may change the permission information of the smartphone C (where for example, the smartphone C may be changed from having only the one-time use permission to having the permanent use permission, or the smartphone C may be changed from having only the one-time use permission to having permanent use permission and management permission (the smartphone C also becomes a management device of the vehicle-mounted device B)), so that leakage of information stored in the vehicle-mounted device B is prevented, and sharing security is improved.

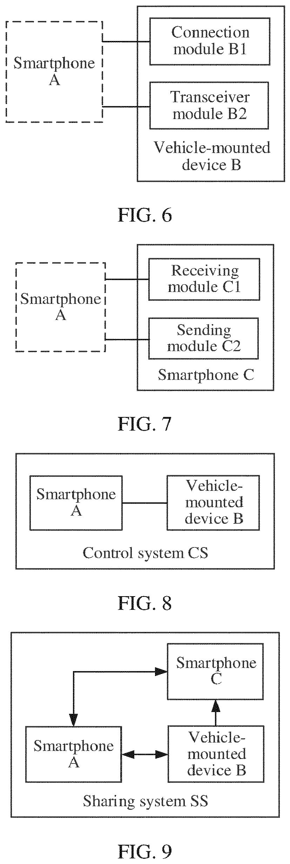

As shown in FIG. 6, an embodiment of this application provides a vehicle-mounted device B (namely, a first device). The vehicle-mounted device B may include a connection module B1 and a transceiver module B2. The connection module B1 may be configured to establish a pairing connection to a smartphone A (which may be a connection module A1 of the smartphone A). The transceiver module B2 may be configured to: receive a first message M1 from the smartphone A (which may be a transceiver module A2 of the smartphone A), and send a second message M2 to the smartphone A (which may be the transceiver module A2 of the smartphone A).

Further, the first message M1 may indicate that the smartphone A is able to share a connection. Herein, it may be understood as that the first message M1 indicates that the smartphone A supports a secure sharing function. If the smartphone A does not support the secure sharing function, the smartphone A has only use permission for the vehicle-mounted device B, but does not have management permission. The second message M2 indicates that the vehicle-mounted device B is able to share a connection (which may be understood as that the vehicle-mounted device B supports the secure sharing function), and the vehicle-mounted device B sets the smartphone A as a management device.

It may be understood that a process in which the smartphone A sends the first message M1 to the vehicle-mounted device B and the vehicle-mounted device B sends the second message M2 to the smartphone A may be considered as secure sharing function interaction between the smartphone A and the vehicle-mounted device B. In addition, when the vehicle-mounted device B sets the smartphone A as the management device, the smartphone A becomes a manager of the vehicle-mounted device B. In other words, the smartphone A has the use permission (which may be permanent use permission) and the management permission for the vehicle-mounted device B, and the vehicle-mounted device B may record the use permission and the management permission of the smartphone A.

According to the technical solution provided in this embodiment of this application, on a basis that the smartphone A and the vehicle-mounted device B establish a pairing connection, the smartphone A can control the vehicle-mounted device B, so that security of the vehicle-mounted device B is improved.

For example, the vehicle-mounted device B may be in a factory setting state, or may be in an unmanaged state. Therefore, when the vehicle-mounted device B is connected to another device such as the smartphone A as an accessory device for the first time, the smartphone A automatically becomes the management device of the vehicle-mounted device B.

In a possible implementation, the transceiver module B2 may receive a third message M3 from the smartphone A (which may be the transceiver module A2 of the smartphone A). The third message M3 may indicate that the vehicle-mounted device B is prohibited from being scanned. In other words, a purpose of sending, by the transceiver module A2 of the smartphone A, the third message M3 to the vehicle-mounted device B is to enable the vehicle-mounted device B to disable a pairing connection function.

Further, the transceiver module B2 records the third message M3, and no longer responds to another device than the smartphone A. The vehicle-mounted device B may enter a mode of being prohibited from being scanned by performing operations on the vehicle-mounted device B such as powering on or off, or pressing and holding a function button. It should be noted that, because the smart device A may further be connected to the vehicle-mounted device B, even if the vehicle-mounted device B enters the mode of being prohibited from being scanned, the vehicle-mounted device B may still be in a mode in which the vehicle-mounted device B can be connected.

In another possible implementation, the transceiver module B2 may receive a fourth message M4 from the smartphone A (which may be the transceiver module A2 of the smartphone A). The fourth message M4 indicates that the vehicle-mounted device B resumes being scanned. In other words, a purpose of sending, by the smartphone A, the fourth message M4 to the vehicle-mounted device B is to enable the vehicle-mounted device B to resume the pairing connection function.

Further, after the transceiver module B2 of the vehicle-mounted device B receives the fourth message M4, the transceiver module B2 records the fourth message M4, and responds to another device than the smartphone A again. The vehicle-mounted device B may enter a mode of resuming being scanned (or may be considered as a mode in which the vehicle-mounted device B resumes being paired and connected) by performing operations on the vehicle-mounted device B such as powering on or off, or pressing and holding a function button.

Optionally, the transceiver module A2 may receive information of the smartphone C from the smartphone A (which may be the transceiver module A2 of the smartphone A), and enter a sharing mode. The transceiver module A2 may further receive a management instruction from the transceiver module A2 of the smartphone A, and determine whether to establish a sharing connection to the smartphone C based on the management instruction.

It should be noted that the information of the smartphone C may include address information and/or name information of the smartphone C.

In a possible implementation, when the management instruction MI is a sharing start instruction MI1, or in other words, the vehicle-mounted device B is about to start establishing a sharing connection to the smartphone C, the transceiver module B2 receives a connection request sent by the smartphone C and the sharing start instruction MI1 from the smartphone A, and establishes a sharing connection to the smartphone C.

In another possible implementation, when the management instruction MI is the sharing termination instruction MI2, the vehicle-mounted device B may exit the sharing mode. Herein, the following two aspects need to be described.

First, the smartphone C unilaterally refuses to establish the sharing connection to the vehicle-mounted device B, and the smartphone C may send second connection information LM2 to the smartphone A. The smartphone A may send the sharing termination instruction MI2 to the transceiver module B2 of the vehicle-mounted device B based on the second connection information LM2, and then the vehicle-mounted device B exits the sharing mode.

Second, although the smartphone C does not refuse to establish the sharing connection to the vehicle-mounted device B, that is, the smartphone C agrees to establish the sharing connection to the connection module B2 of the vehicle-mounted device B, the transceiver module B2 of the vehicle-mounted device B does not receive the connection request from the smartphone C within a time range that is set by the vehicle-mounted device B to enter the sharing mode. In this case, the vehicle-mounted device B may actively exit the sharing mode.

In still another possible implementation, the vehicle-mounted device B may further include a setting module B3. The setting module B3 may set a time range (for example, 3 minutes) in which the vehicle-mounted device B enters the sharing mode. If the vehicle-mounted device B does not receive the connection request sent by the smart device C within the time range, the vehicle-mounted device B may exit the sharing mode (refer to the foregoing descriptions).

Within the time range in which the vehicle-mounted device B enters the sharing mode, the vehicle-mounted device B may receive a verification code randomly generated by the smartphone A, to improve connection efficiency between the smartphone C and the vehicle-mounted device B. In addition, the vehicle-mounted device B may enter the sharing mode without disconnecting the pairing connection to the smartphone A, which prevents a reconnection between the smartphone A and the vehicle-mounted device B, and prevents repeated synchronization of information stored in the vehicle-mounted device B.

Further, the management instruction MI is the sharing start instruction MI1, and the transceiver module B2 may feed back device list information to the smartphone A based on the information of the smartphone C. The smartphone A may change permission information of the smart device C based on the device list information. The permission information includes management permission and/or use permission.

According to the technical solution provided in this embodiment of this application, when another device such as the smartphone C uses the vehicle-mounted device B, the permission information of the smartphone C (in other words, a device associated with the vehicle-mounted device B) may be changed (where for example, the smartphone C may be changed from having only one-time use permission to having permanent use permission, or the smartphone C may be changed from having only the one-time use permission to having permanent use permission and management permission (the smartphone C also becomes a management device of the vehicle-mounted device B)), so that leakage of information stored in the vehicle-mounted device is prevented, and sharing security is improved.

An embodiment of this application further provides a smartphone C (namely, a third device), as shown in FIG. 7. The smartphone C may include a receiving module C1 and a sending module C2. The receiving module C1 is configured to: receive a first message M1 from a smartphone A, feed back information of the smartphone C to the smartphone A based on the first message M1, and receive information of a vehicle-mounted device B from the smartphone A. The sending module C2 is configured to: determine connection information LM based on the information of the vehicle-mounted device B, and feed back the connection information LM to the smartphone A.

In the technical solution provided in this embodiment of this application, on a basis that the vehicle-mounted device B and the smartphone A establish a pairing connection, the vehicle-mounted device B is shared with the smartphone C through the smartphone A, so that the smartphone C can also use the vehicle-mounted device B, security of the vehicle-mounted device B is improved, and leakage of information stored in the vehicle-mounted device B is also prevented.

Further, the sending module C1 may determine the connection information LM based on the information of the vehicle-mounted device B. The connection information LM may include first connection information LM1 and second connection information LM2. The first connection information LM1 indicates that the smartphone C agrees to establish a sharing connection to the vehicle-mounted device B, and the second connection information LM2 indicates that the smartphone C refuses to establish the sharing connection to the vehicle-mounted device B.

In a possible implementation, when the connection information LM is the first connection information LM1, the sending module C1 sends the first connection information LM1 to the smartphone A, indicating that the smartphone C agrees to establish the sharing connection to the vehicle-mounted device B. Therefore, the sending module C1 sends a connection request to the vehicle-mounted device B.

In another possible implementation, when the connection information LM is the second connection information LM2, the sending module C1 sends the second connection information LM2 to the smartphone A, indicating that the smartphone C refuses to establish the sharing connection to the vehicle-mounted device B. In this case, the sending module C1 may not send the connection request to the vehicle-mounted device B.

As shown in FIG. 8, this application provides a control system. The control system CS includes the smartphone A (namely, the second device, as shown in FIG. 5) and the vehicle-mounted device B (that is, the first device, as shown in FIG. 6). The smartphone A is coupled to the vehicle-mounted device B.

According to the control system provided in this embodiment of this application, the smartphone A can control the vehicle-mounted device B, so that security of the vehicle-mounted device B is improved.

Based on the control system CS shown in FIG. 8, an embodiment of this application further provides a sharing system SS, as shown in FIG. 9. The sharing system SS may include the smartphone A (namely, the second device, as shown in FIG. 5), the vehicle-mounted device B (namely, the first device, as shown in FIG. 6), and the smartphone C (namely, the third device, as shown in FIG. 7). The vehicle-mounted device B, the smartphone A, and the smartphone C are coupled to each other. It may be understood that the sharing system SS includes the control system CS and the smartphone C.

According to the sharing system provided in this embodiment of this application, the smartphone A can control the vehicle-mounted device B, and the smartphone A further implements a sharing connection between the smartphone C and the vehicle-mounted device B, so that the smartphone C can use (or manage) the vehicle-mounted device B, and security of the vehicle-mounted device B is improved.

In a possible implementation, an embodiment of this application provides a computer-readable storage medium, and the computer-readable storage medium stores instructions. When the stored instructions are run on a computer, the stored instructions may be used to perform the control method shown in any one of FIG. 1 to FIG. 3, or may be used to perform the sharing method shown in FIG. 4.

In another possible implementation, an embodiment of this application provides a computer program product, where the computer program product includes instructions. When the instructions are runs on a computer or a processor, the computer or the processor is enabled to implement the control method shown in any one of FIG. 1 to FIG. 3, and may further implement the sharing method shown in FIG. 4.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person skilled in the art should easily be aware that units and algorithm steps in the examples described with reference to embodiments disclosed in this specification can be implemented by electronic hardware or a combination of computer software and electronic hardware. Whether a function is executed in a manner of hardware or software depends on specific applications and design constraint conditions of the technical solutions. A person skilled in the art may use different methods to implement the described functions for each specific application. However, it should not be considered that the implementation goes beyond the scope of embodiments of this application.

A person skilled in the art may clearly understand that, for a purpose of convenient and brief description, for detailed working processes of the foregoing systems, apparatuses, and units, refer to corresponding processes in the foregoing method embodiments. Details are not described herein again.

In the several embodiments provided in this application, it should be understood that the disclosed systems, apparatuses, and methods may be implemented in other manners. For example, the described apparatus embodiment is merely schematic. For example, the division into the units is merely logical function division. In actual application, there may be another division manner. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate parts may or may not be physically separate, and parts displayed as units may or may not be physical units, and may be located at one location, or may be distributed on a plurality of network units. Some or all of the units may be selected based on an actual requirement to achieve an objective of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to current technologies, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit a protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control method, comprising:
establishing a pairing connection to a first device;
sending a first message to the first device, wherein the first message indicates that a second device is able to share a connection; and
receiving a second message sent by the first device based on the first message, wherein the second message indicates that the first device is able to share a connection, and the first device sets the second device as a management device.

2. The method according to claim 1, wherein after the receiving a second message sent by the first device based on the first message, the method further comprises:
sending a third message to the first device, wherein the third message indicates that the first device is prohibited from being scanned.

3. The method according to claim 1 or 2, wherein after the receiving a second message sent by the first device based on the first message, the method further comprises:
sending a fourth message to the first device, wherein the fourth message indicates that the first device resumes being scanned.

4. A control method, comprising:
establishing a pairing connection to a second device;
receiving a first message from the second device, wherein the first message indicates that the second device is able to share a connection; and
sending a second message to the second device based on the first message, wherein the second message indicates that a first device is able to share a connection, and the first device sets the second device as a management device.

5. The method according to claim 4, wherein after the sending a second message to the second device, the method further comprises:
receiving a third message from the second device, wherein the third message indicates that the first device is prohibited from being scanned.

6. The method according to claim 4 or 5, wherein after the sending a second message to the second device, the method further comprises:
receiving a fourth message from the second device, wherein the fourth message indicates that the first device resumes being scanned.

7. A sharing method, comprising:
establishing a pairing connection to a first device;
sending a first message to the first device, wherein the first message indicates that a second device is able to share a connection;
receiving a second message sent by the first device based on the first message, wherein the second message indicates that the first device is able to share a connection, and the first device sets the second device as a management device;
sending the first message to a third device, sending information that is of the third device and that is fed back by the third device based on the first message to the first device, and sending information of the first device to the third device; and
receiving connection information fed back by the third device based on the information of the first device, and sending a management instruction to the first device based on the connection information.

8. The method according to claim 7, wherein the connection information comprises first connection information and second connection information, the first connection information indicates that the third device agrees to establish a sharing connection to the first device, and the second connection information indicates that the third device refuses to establish the sharing connection to the first device.

9. The method according to claim 8, wherein the management instruction comprises a sharing start instruction and a sharing termination instruction, the sharing start instruction indicates that the first device starts to establish the sharing connection to the third device, and the sharing termination instruction indicates that the first device terminates establishing the sharing connection to the third device.

10. The method according to claim 9, wherein the sending a management instruction to the first device based on the connection information comprises:
when the connection information is the first connection information, sending the sharing start instruction to the first device; or
when the connection information is the second connection information, sending the sharing termination instruction to the first device.

11. The method according to any one of claims 8 to 10, wherein the method further comprises:
when the connection information is the first connection information, receiving device list information fed back by the first device based on the information of the third device, and changing permission information of the third device based on the device list information, wherein the permission information comprises management permission and/or use permission.

12. The method according to any one of claims 7 to 11, wherein the method further comprises:
sending a third message to the first device, wherein the third message indicates that the first device is prohibited from being scanned.

13. The method according to any one of claims 7 to 12, wherein the method further comprises:
sending a fourth message to the first device, wherein the fourth message indicates that the first device resumes being scanned.

14. The method according to any one of claims 7 to 13, wherein the information of the third device comprises address information and/or name information of the third device; and
the information of the first device comprises at least one of address information, name information, a device form, a device type, and device information of the first device.

15. The method according to claim 11, wherein the device list information comprises at least one of address information, name information, permission information, and a connection status of a device paired with the first device.

16. A sharing method, comprising:
receiving a first message from a second device, and feeding back information of a third device to the second device based on the first message, wherein the first message indicates that the second device is able to share a connection;
receiving information of a first device from the second device; and
feeding back connection information determined based on the information of the first device to the second device.

17. The method according to claim 16, wherein the feeding back connection information determined based on the information of the first device to the second device comprises:
determining the connection information based on the information of the first device, wherein the connection information comprises first connection information and second connection information, the first connection information indicates that the third device agrees to establish a sharing connection to the first device, and the second connection information indicates that the third device refuses to establish the sharing connection to the first device; and
when the connection information is the first connection information, sending the first connection information to the second device, and sending a connection request to the first device; or
when the connection information is the second connection information, sending the second connection information to the second device.

18. The method according to claim 16 or 17, wherein the information of the third device comprises address information and/or name information of the third device; and
the information of the first device comprises at least one of address information, name information, a device form, a device type, and device information of the first device.

19. A sharing method, comprising:
establishing a pairing connection to a second device;
receiving a first message from the second device, wherein the first message indicates that the second device is able to share a connection;
sending a second message to the second device based on the first message, wherein the second message indicates that a first device is able to share a connection, and the first device sets the second device as a management device;
receiving information of a third device from the second device, and entering a sharing mode; and
receiving a management instruction from the second device, and determining whether to establish a sharing connection to the third device based on the management instruction.

20. The method according to claim 19, wherein the management instruction comprises a sharing start instruction and a sharing termination instruction, the sharing start instruction indicates that the first device starts to establish the sharing connection to the third device, and the sharing termination instruction indicates that the first device terminates establishing the sharing connection to the third device.

21. The method according to claim 20, wherein the receiving a management instruction from the second device, and determining whether to establish a sharing connection to the third device based on the management instruction comprises:
when the management instruction is the sharing start instruction, receiving a connection request from the third device and the sharing start instruction from the second device, and establishing the sharing connection to the third device; or
when the management instruction is the sharing termination instruction, exiting the sharing mode.

22. The method according to any one of claims 19 to 21, wherein after the receiving information of a third device from the second device, and entering a sharing mode, the method further comprises:
setting a time range for entering the sharing mode; and
exiting the sharing mode if the connection request from the third device is not received within the time range.

23. The method according to claim 20 or 21, wherein the method further comprises:
when the management instruction is the sharing start instruction, feeding back device list information to the second device based on the information of the third device.

24. A second device, comprising:
a connection module, configured to establish a pairing connection to a first device; and
a transceiver module, configured to: send a first message to the first device, and receive a second message sent by the first device based on the first message, wherein the first message indicates that the second device is able to share a connection, the second message indicates that the first device is able to share a connection, and the first device sets the second device as a management device.

25. The second device according to claim 24, wherein the transceiver module is further configured to:
send a third message to the first device, wherein the third message indicates that the first device is prohibited from being scanned.

26. The second device according to claim 24 or 25, wherein the transceiver module is further configured to: send a fourth message to the first device, wherein the fourth message indicates that the first device resumes being scanned.

27. The second device according to any one of claims 24 to 26, wherein the transceiver module is further configured to:
send the first message to a third device, send information that is of the third device and that is fed back by the third device based on the first message to the first device, and send information of the first device to the third device; and
receive connection information fed back by the third device based on the information of the first device, and send a management instruction to the first device based on the connection information.

28. The second device according to claim 27, wherein the connection information comprises first connection information and second connection information, the first connection information indicates that the third device agrees to establish a sharing connection to the first device, and the second connection information indicates that the third device refuses to establish the sharing connection to the first device.

29. The second device according to claim 28, wherein the management instruction comprises a sharing start instruction and a sharing termination instruction, the sharing start instruction indicates that the first device starts to establish the sharing connection to the third device, and the sharing termination instruction indicates that the first device terminates establishing the sharing connection to the third device.

30. The second device according to claim 29, wherein the transceiver module is configured to:
when the connection information is the first connection information, send the sharing start instruction to the first device; or
when the connection information is the second connection information, send the sharing termination instruction to the first device.

31. The second device according to any one of claims 28 to 30, wherein the transceiver module is further configured to:
when the connection information is the first connection information, receive device list information fed back by the first device based on the information of the third device, and change permission information of the third device based on the device list information, wherein the permission information comprises management permission and/or use permission.

32. The second device according to any one of claims 24 to 32, wherein the transceiver module is further configured to:
send the third message to the first device, wherein the third message indicates that the first device is prohibited from being scanned.

33. The second device according to any one of claims 24 to 32, wherein the transceiver module is further configured to:
send the fourth message to the first device, wherein the fourth message indicates that the first device resumes being scanned.

34. The second device according to any one of claims 24 to 33, wherein the information of the third device comprises address information and/or name information of the third device; and
the information of the first device comprises at least one of address information, name information, a device form, a device type, and device information of the first device.

35. The second device according to claim 31, wherein the device list information comprises at least one of address information, name information, permission information, and a connection status of a device paired with the first device.

36. A first device, comprising:
a connection module, configured to establish a pairing connection to a second device; and
a transceiver module, configured to: receive a first message from the second device, and send a second message to the second device based on the first message, wherein
the first message indicates that the second device is able to share a connection, the second message indicates that the first device is able to share a connection, and the first device sets the second device as a management device.

37. The first device according to claim 36, wherein the transceiver module is further configured to:
receive a third message from the second device, wherein the third message indicates that the first device is prohibited from being scanned.

38. The first device according to claim 36 or 37, wherein the transceiver module is further configured to:
receive a fourth message from the second device, wherein the fourth message indicates that the first device resumes being scanned.

39. The first device according to any one of claims 36 to 38, wherein the transceiver module is further configured to:
receive information of a third device from the second device, and enter a sharing mode; and
receive a management instruction from the second device, and determine whether to establish a sharing connection to the third device based on the management instruction.

40. The first device according to claim 39, wherein the management instruction comprises a sharing start instruction and a sharing termination instruction, the sharing start instruction indicates that the first device starts to establish the sharing connection to the third device, and the sharing termination instruction indicates that the first device terminates establishing the sharing connection to the third device.

41. The first device according to claim 40, wherein the transceiver module is configured to:
when the management instruction is the sharing start instruction, receive a connection request from the third device and the sharing start instruction from the second device, and establish the sharing connection to the third device; or
when the management instruction is the sharing termination instruction, exit the sharing mode.

42. The first device according to any one of claims 39 to 41, wherein the first device further comprises a setting module, and the setting module is configured to:
set a time range for entering the sharing mode; and
exit the sharing mode if the connection request from the third device is not received within the time range.

43. The first device according to claim 40 or 41, wherein the transceiver module is further configured to:
when the management instruction is the sharing start instruction, feed back device list information to the second device based on the information of the third device.

44. A third device, comprising:
a receiving module, configured to: receive a first message from a second device, feed back information of the third device to the second device based on the first message, and receive information of a first device from the second device; and
a sending module, configured to feed back connection information determined based on the information of the first device to the second device.

45. The third device according to claim 44, wherein the sending module is configured to:
determine the connection information based on the information of the first device, wherein the connection information comprises first connection information and second connection information, the first connection information indicates that the third device agrees to establish a sharing connection to the first device, and the second connection information indicates that the third device refuses to establish the sharing connection to the first device; and
when the connection information is the first connection information, send the first connection information to the second device, and send a connection request to the first device; or
when the connection information is the second connection information, send the second connection information to the second device.

46. A control system, comprising the second device according to any one of claims 24 to 35 and the first device according to any one of claims 36 to 43, wherein
the second device is coupled to the first device.

47. A sharing system, comprising the second device according to any one of claims 24 to 35, the first device according to any one of claims 36 to 43, and the third device according to either of claims 44 and 45, wherein
the first device, the second device, and the third device are coupled to each other.

48. A computer-readable storage medium, wherein the computer-readable storage medium stores instructions, and when the instructions are run on a computer, the instructions are used to perform the method according to any one of claims 1 to 23.

49. A computer program product, wherein the computer program product comprises instructions, and when the instructions are run on a computer or a processor, the computer or the processor is enabled to implement the method according to any one of claims 1 to 23.
